# EUROPEAN PATENT APPLICATION

(11) **EP 4 791 058 A1**
(43) Date of publication of application: **12.08.2026**
(21) Application number: 24881432.9
(22) Date of filing: 11.10.2024
(51) Int. Cl.: H04W 12/0431, H04W 12/06

(54) **COMMUNICATION METHOD AND RELATED APPARATUS**

(30) Priority: 23.10.2023 CN 202311382237
(71) Applicant: HUAWEI TECHNOLOGIES CO., LTD., Shenzhen 518129 (CN)
(72) Inventor: WANG, Yong, Shenzhen, Guangdong 518129 (CN); WANG, Jian, Shenzhen, Guangdong 518129 (CN)
(74) Representative: Maiwald GmbH
(86) International application number: PCT/CN2024/124246
(87) International publication number: WO 2025/087066

(57) **Abstract**

A communication method and a related apparatus are provided, and are applied to the field of communication technologies. In this application, a first node may broadcast key information, and the key information is associated with a first key. The first node broadcasts the key information associated with the first key, so that the first node can perform, by using the first key, security protection on a message sent to the outside. Another node that receives a first message may determine the first key based on the key information. If the another node needs to send a message to the first node, the another node may also perform security protection on the message by using the first key. In some solutions, the first node needs to broadcast information to the outside, so that another node senses the first node. For nodes that need to communicate with the first node, in this application, these nodes can obtain a key without establishing a connection to the first node, so that when the another node has not accessed the first node, a message sent to the first node may be encrypted by using the first key, thereby significantly improving communication security.

## Description

This application claims priority to Chinese Patent Application No. 202311382237.6, filed with the China National Intellectual Property Administration on October 23, 2023 and entitled "COMMUNICATION METHOD AND RELATED APPARATUS", which is incorporated herein by reference in its entirety.

### TECHNICAL FIELD

This application relates to the field of communication technologies, and in particular, to the field of short-range communication technologies, for example, communication in scenarios such as an intelligent vehicle, a smart home, a smart terminal, and smart manufacturing, and specifically relates to a communication method and a related apparatus.

### BACKGROUND

With continuous development of communication technologies, smart application scenarios such as a smart home, a smart cockpit, smart driving, smart manufacturing, and smart transportation emerge. In these scenarios, security needs to be considered in a communication process. Especially in a wireless transmission scenario, two nodes need to first sense, in complex space, nodes that the two nodes need to communicate with, and then establish a wireless connection after sensing a peer end, to implement data transmission.

To ensure data transmission security and storage security between nodes, a node usually encrypts to-be-transmitted data before storing or transmitting the data. After receiving the data, a node of a receiver decrypts ciphertext to restore plaintext. However, a key used for encryption is usually obtained through key agreement in a process in which a node accesses another node. However, before the node successfully accesses the another node, a message transmitted between the node or the another node is still plaintext. Consequently, the message transmitted between the two nodes before the key is not obtained through agreement still has a leakage risk, and network connection security and data security of the node are affected.

Therefore, how to improve security of communication between nodes is a problem that is being studied by a person skilled in the art.

### SUMMARY

This application provides a communication method and a related apparatus, to improve security of communication between nodes.

According to a first aspect, this application provides a communication method. The method includes: generating a first message, where the first message includes key information, and the key information is associated with a first key; and sending the first message in a broadcast manner. The first key is used to perform security protection on at least one second message, and the at least one second message is a message that is related to the first node and that is transmitted after the first message. The transmission may include sending (including forwarding and the like), receiving (including monitoring and the like), or the like. For example, the message related to the first node includes a message sent by the first node and/or a message received by the first node.

The communication method may be applied to the first node, for example, performed by a hardware module and/or a software module in the first node.

In this application, that the first node broadcasts the key information associated with the first key is equivalent to notifying the outside of a clue for obtaining the first key, and the first node may subsequently perform, by using the first key, security protection on the message sent by the first node. Another node that receives the first message may determine the first key based on the key information. If the node needs to send a message to the first node, the node may also perform security protection on the message by using the first key.

Optionally, the first node may be associated with another node, and the first message may be used by the another node to sense the first node.

A person skilled in the art should know that, in a wireless communication scenario, the first node needs to broadcast information to the outside, so that another node senses the first node. Based on the solution provided in this application, a node that needs to communicate with the first node can obtain the first key by using the first key without establishing a connection to the first node, so that when another node has not accessed the first node, the message sent to the first node may be encrypted by using the first key. In this way, communication security can be significantly improved.

Similarly, for the first node, after the first node broadcasts the key information associated with the first key, the information sent by the first node may be encrypted by using the first key and then sent. The node that successfully obtains the first key may obtain the encrypted information of the first node before establishing an association with the first node, so that security of the information broadcast by the first node can be improved.

In another possible implementation of the first aspect, the first message may also be sent in a multicast manner. For example, the first node sends the first message to a node in a subnet.

In another possible implementation of the first aspect, after sending the first message in a broadcast manner, the method further includes:
receiving a third message from a second node, where the third message is used to request to establish an association with the first node. Security protection is performed on the third message by using the first key, and the third message belongs to the at least one second message.

In the foregoing implementation, the first node may establish an association with another node (for example, the second node), and the association between the first node and the another node may be usually initiated by the second node. For example, the second node sends the third message to request an association with the first node, and security protection may be performed on the third message by using the first key, to further improve communication security in an access scenario.

In another possible implementation of the first aspect, the first key includes an integrity protection (or IP for short) key, and that security protection is performed on the third message by using the first key includes: Integrity protection is performed on the third message by using the integrity protection key. After receiving the third message from the second node, the method further includes: checking integrity of the third message by using the integrity protection key.

In the foregoing implementation, the security protection may include integrity protection, and the integrity protection can prevent content of the message from being tampered with. For example, security protection may be implemented by generating a check value. For example, the second node generates the check value by using the first key and all or a part of information in the third message, and the first node may check, by using the first key, the check value, and all or a part of information in the third message, whether the information is tampered with, thereby improving security.

In another possible implementation of the first aspect, the first key includes an encryption key, and that security protection is performed on the third message by using the first key includes: The third message is encrypted by using the encryption key. After receiving the third message from the second node, the method further includes: decrypting the third message by using the encryption key.

In the foregoing manner, information in the message can be further prevented from being leaked, thereby improving security.

Optionally, the integrity protection key and the encryption key may be a same key, or may be different keys.

In another possible implementation of the first aspect, the first node includes a key configuration module, at least one key is configured in the key configuration module, and the first node may obtain the first key from the key configuration module. For example, the first node may obtain the first key from the key configuration module, and then the first node determines the key information corresponding to the first key.

In another possible implementation of the first aspect, at least one key and key information corresponding to the at least one key are configured in the key configuration module. The first node may obtain the key information of the first key from the key configuration module, and send the first message carrying the key information to another node. When the first key needs to be used, for example, a plaintext needs to be encrypted or ciphertext needs to be decrypted, the first key corresponding to the key information of the first key is obtained from the key configuration module.

In another possible implementation of the first aspect, the first node includes a key configuration module, at least one key and key information corresponding to the at least one key are configured in the key configuration module, and the first node may obtain, from the key configuration module, the first key and the key information associated with the first key.

In conclusion, the key and/or the key information of the key may be centrally managed in the key configuration module, and can be obtained by the first node as required. This can further improve decoupling of components in the first node, improve management convenience and upgrade flexibility, and improve user experience.

In another possible implementation of the first aspect, the first node includes a key configuration module, and before sending the first message in a broadcast manner, the method further includes: determining the key information via the key configuration module. At least one key and information corresponding to the at least one key are configured in the key configuration module, the first key belongs to the at least one key, and the key information is information corresponding to the first key.

For example, the key configuration module stores a plurality of keys and an identity (identification, or identify, ID) corresponding to each of the plurality of keys. The first node may obtain one key (or several keys) from the key configuration module as the first key, the ID of the first key is used as the key information of the first key.

In another possible implementation of the first aspect, a security type of information in the first message belongs to at least one of the following types:
with encryption and with integrity protection, with encryption and without integrity protection, without encryption and with integrity protection, and without encryption and without integrity protection, where information whose security type is with encryption and with integrity protection is information that is encrypted and integrity-protected, information whose security type is with encryption and without integrity protection is information that is encrypted but not integrity-protected, information whose security type is without encryption and with integrity protection is information that is not encrypted but integrity-protected, and information whose security type is without encryption and without integrity protection is information that is not encrypted and that is not integrity-protected.

In another possible implementation of the first aspect, encryption or integrity protection may be performed on information included in the first message by using the first key. After receiving the first message, another node may first obtain the first key based on the key information in the first message, to obtain other information in the first message by using the first key.

In another possible implementation of the first aspect, the first message further includes industry information, and the industry information indicates an industry to which the first node belongs.

Optionally, security protection may be performed on the industry information by using the first key. For example, the industry information may be information without encryption and with integrity protection, or the industry information may be information with encryption and with integrity protection.

In some scenarios, different industries have different security requirements for wireless access scenarios. In some industries, a large amount of network-related information needs to be kept confidential, for example, a public security wireless communication system and a wireless communication system in the electric power industry. In the foregoing implementation, the industry information is carried in the first message, so that a receiver of the first message can determine a security requirement of the industry based on the industry information. In this way, it is determined whether the first key needs to be used to perform security protection on the transmitted information, or it is determined that the first node uses the first key to perform security protection on the transmitted information.

In another possible implementation of the first aspect, the key information is information without encryption and with integrity protection or is information without encryption and with integrity protection. In other words, the key information may not be encrypted by using the first key, so that the node that receives the first message can obtain the first key.

Optionally, when the key information is information without encryption and with integrity protection, integrity protection is performed on the key information by using the first key. In this implementation, because integrity protection is performed on the key information, content of the key information obtained by the receiver may not be affected, and a peer end may check whether the key information is tampered with by an attacker. This can further improve communication security.

In another possible implementation of the first aspect, the first key includes a first signaling plane key, and the at least one second message is a signaling plane message.

In this implementation, the first key may include a key used for signaling plane encryption, so that a plurality of types of transmitted data can be encrypted by using different types of keys, thereby improving user experience.

In another possible implementation of the first aspect, after sending the first message in a broadcast manner, the method further includes:
determining a second key by agreeing on with the second node, where the second key is used to perform security protection on a message between the first node and the second node.

The second key may be directly used for encryption or integrity protection, or the second key may be used to derive a session key. The session key may include one or more of an encryption key, an integrity protection key, and an authenticated encryption key.

In this implementation, the first node and the second node may also obtain the second key through agreement, and the second key may also be used to replace the first key to encrypt the message between the first node and the second node. Alternatively, the first key and the second key may be used to encrypt different types of data, and the like, to adapt to security requirements in different communication scenarios and improve security.

In another possible implementation of the first aspect, the at least one second message is a message that is related to the first node and that is transmitted after the first message and before the second key is determined.

The second key is used to derive a session key, the session key is used to perform security protection on at least one fourth message, and the at least one fourth message is a message transmitted between the first node and the second node after the second key is determined.

In this implementation, before the second key is determined, security protection may be performed on the message related to the first node by using the first key. After the second key is determined, security protection is performed on a message transmitted between the first node and the second node by using a key derived based on the second key. In this way, transmission between the first node and the second node may be protected by using the second key obtained through separate agreement between the first node and the second node, thereby further improving communication security.

Optionally, in this case, if the first node and another node (for example, a third node) have not obtained a new key through agreement, the first node may still use the first key to perform security protection on a message transmitted between the first node and the third node.

In another possible implementation of the first aspect, the at least one second message includes a message transmitted between the first node and the second node after the second key is determined.

In this implementation, after the first node and the second node determine the second key, security protection may still be performed, by using the first key, on the message transmitted between the first node and the second node.

In another possible implementation of the first aspect, the at least one second message is a signaling plane message. The second key is used to derive a session key, the session key is used to perform security protection on at least one fifth message, the at least one fifth message is a user plane message, and the at least one fifth message is a message transmitted between the first node and the second node after the second key is determined.

In this implementation, the key derived based on the second key is used to encrypt the user plane message. After the second key is determined, the signaling plane message between the first node and the second node may still be encrypted by using the first key.

In another possible implementation of the first aspect, the key information includes an identifier of the first key. This implementation provides an example of the key information. The key information may be an identifier of the key, and the receiver of the first message may also obtain a correspondence between the identifier of the key and the key in advance, so that the first key can be determined based on the identifier.

In another possible implementation of the first aspect, the first key and/or the key information are/is predefined.

In another possible implementation of the first aspect, the third message includes a second public key, and the second public key is associated with a first key agreement algorithm and a second private key. Before generating the first message, the method further includes: determining a first private key and a first public key according to the first key agreement algorithm, where the key information includes the first public key. After receiving the third message from the second node, the method further includes: determining the first key based on the first private key and the second public key.

This implementation provides an example of another type of key information. The key information may include the first public key, and the public key may participate in key generation. In this case, the key information is not encrypted but may be integrity-protected, the second public key is not encrypted but may be integrity-protected, and information other than the second public key in the third message may be encrypted.

It should be noted that, in this case, after the second node sends the third message to the first node, the first node may determine the first key. After the first key is determined, a message sent by the first node may be encrypted by using the first key.

In another possible implementation of the first aspect, the at least one second message includes a broadcast message, for example, a broadcast message broadcast by the first node.

According to a second aspect, this application further provides a communication method, including: receiving a first message broadcast by a first node, where the first message includes key information; and determining a first key based on the key information.

The first key is used to perform security protection on at least one second message, the at least one second message is a message that is related to the first node and that is transmitted after the first message, and the message related to the first node includes a message from the first node and/or a message sent to the first node.

The communication method may be applied to a second node, for example, performed by a hardware module and/or a software module in the second node.

In another possible implementation of the second aspect, the method further includes: sending a third message to the first node, where the third message is used to request to establish an association with the first node, security protection is performed on the third message by using the first key, and the third message belongs to the at least one second message.

In another possible implementation of the second aspect, the first key includes an integrity protection key, and before sending the third message to the first node, the method further includes: generating a check value by using the integrity protection key, where the check value is used to check integrity of the third message, and the check value is carried in the third message.

In another possible implementation of the second aspect, the first key includes an encryption key, and sending the third message to the first node includes: encrypting the second message by using the encryption key; and sending the encrypted second message to the first node.

In another possible implementation of the second aspect, the second node includes a key configuration module, and before sending the first message in a broadcast manner, the method further includes: determining the key information via the key configuration module. At least one key and information corresponding to the at least one key are configured in the key configuration module, the first key belongs to the at least one key, and the key information is information corresponding to the first key.

In another possible implementation of the second aspect, the method further includes: when the key information is information without encryption and with integrity protection, checking integrity of the key information by using the first key.

In another possible implementation of the second aspect, the first key includes a first signaling plane key, and the at least one second message is a signaling plane message.

In another possible implementation of the second aspect, after receiving the first message broadcast by the first node, the method further includes: determining a second key by agreeing on with the first node, where the second key is used to perform security protection on a message between the first node and the second node.

In another possible implementation of the second aspect, the at least one second message is a message that is related to the first node and that is transmitted after the first message and before the second key is determined. The second key is used to derive a session key, the session key is used to perform security protection on at least one fourth message, and the at least one fourth message is a message transmitted between the first node and the second node after the second key is determined.

In another possible implementation of the second aspect, the at least one second message includes a message transmitted between the first node and the second node after the second key is determined.

In another possible implementation of the second aspect, the at least one second message is the signaling plane message. The second key is used to derive a session key, the session key is used to perform security protection on at least one fifth message, the at least one fifth message is a user plane message, and the at least one fifth message is a message transmitted between the first node and the second node after the second key is determined.

In another possible implementation of the second aspect, the first message further includes industry information, and the industry information indicates an industry to which the first node belongs.

In another possible implementation of the second aspect, the key information includes an identifier of the first key.

In another possible implementation of the second aspect, the first key and/or the key information are/is predefined.

In another possible implementation of the second aspect, the key information includes a first public key, and the first public key is associated with a first key agreement algorithm and a first private key. The method further includes: determining a second private key and a second public key according to the first key agreement algorithm, where the third message includes the second public key; and determining the first key based on the second private key and the first public key.

In another possible implementation of the second aspect, the at least one second message includes a broadcast message.

According to a third aspect, this application further provides a communication apparatus. The communication apparatus includes a communication unit and a processing unit. The communication apparatus is configured to implement the method according to any one of the implementations of the first aspect, or is configured to implement the method according to any one of the implementations of the second aspect.

According to a fourth aspect, this application further provides a communication apparatus. The communication apparatus includes a processor. When invoking a computer program or instructions in a memory, the processor implements the method according to any one of the implementations of the first aspect, or implements the method according to any one of the implementations of the second aspect.

It should be noted that the processor described in the fourth aspect may be a processor (referred to as a dedicated processor for ease of differentiation) specially configured to perform these methods, or may be a processor that performs these methods by invoking a computer program, for example, a general-purpose processor.

Optionally, the computer program may be stored in the memory. For example, the memory may be a non-transitory (non-transitory) memory, for example, a read-only memory (read-only memory, ROM). The memory and the processor may be integrated on a same component, or may be separately disposed on different components. A type of the memory and a manner of setting the memory and the processor are not limited in this application.

In a possible implementation, the at least one memory is located outside the communication apparatus.

In another possible implementation, the at least one memory is located in the communication apparatus.

In another possible implementation, some memories of the at least one memory are located in the communication apparatus, and the other memories are located outside the communication apparatus.

In this application, the processor and the memory may alternatively be integrated into one component. In other words, the processor and the memory may alternatively be integrated together.

According to a fifth aspect, this application further provides a communication apparatus, including a logic circuit and an interface. The logic circuit is coupled to the interface. The interface is configured to input to-be-processed data, and the logic circuit processes the to-be-processed data according to the method in any one of the implementations of the first aspect or the method in any one of the implementations of the second aspect, to obtain processed data. The interface is further configured to output the processed data.

According to a sixth aspect, this application further provides a computer-readable storage medium. The computer-readable storage medium is configured to store instructions or a computer program. When the instructions or the computer program are executed, the method according to any one of the implementations of the first aspect or the method according to any one of the implementations of the second aspect is implemented.

According to a seventh aspect, this application further provides a computer program product. When instructions or a computer program is executed, the method according to any one of the implementations of the first aspect or the method according to any one of the implementations of the second aspect is implemented.

According to an eighth aspect, this application further provides a terminal. The terminal includes the communication apparatus according to any one of the third aspect to the fifth aspect. Further, the terminal may be an intelligent terminal or a transportation tool such as a vehicle, an uncrewed aerial vehicle, or a robot.

According to a ninth aspect, this application further provides a communication system. The communication system includes a first node and/or a second node. The first node is configured to implement the method according to any one of the implementations of the first aspect, and the second node is configured to implement the method according to any one of the implementations of the second aspect.

### BRIEF DESCRIPTION OF DRAWINGS

The following briefly describes accompanying drawings used in describing embodiments.
FIG. 1 is a diagram of an architecture of a communication system according to an embodiment of this application;
FIG. 2 is a schematic flowchart of a communication method according to an embodiment of this application;
FIG. 3 is a diagram of an association procedure without a security context;
FIG. 4 is a diagram of an association procedure with a security context;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes embodiments of this application in detail with reference to accompanying drawings.

In this application, a node is a device having a communication capability, and includes but is not limited to one or more of user equipment, a network device, an industrial device, and the like. The user equipment includes a handheld terminal, a wearable terminal, a transportation means, a vehicle-mounted device, a sensing device, a smart home device, a leisure and entertainment device, and the like. The handheld terminal includes but is not limited to a mobile phone, a tablet, or a notebook computer. The wearable device includes but is not limited to headsets, smart bands, smart watches, or smart glasses. The transportation means includes but is not limited to a vehicle, a ship, aircraft, rail transport (such as a subway and a high-speed railway), or a logistics robot (for example, an automated guided vehicle (automated guided vehicle, AGV)). The vehicle-mounted device includes but is not limited to a domain controller (domain controller, DC), a screen, a microphone, a speaker, an electronic key, keyless entry, a startup system controller, a battery management system (battery management system, BMS), a battery pack, or a cell. The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security device. The leisure and entertainment device is, for example, a virtual reality (virtual reality, VR) device, a mixed reality (mixed reality, MR) device, a massage chair, a home theater, a game control device, or a 4D cinema cockpit.

The network device includes but is not limited to a router, a switch, or a base station. The industrial device is, for example, an industrial robot or a robotic arm.

The node in embodiments of this application may be used in various scenarios such as an intelligent vehicle, a smart home, a smart terminal, smart manufacturing, or a smart exhibition hall. In some application scenarios or some network types, a device having a similar communication capability may not be referred to as a node. However, for ease of description, devices having communication capabilities are collectively referred to as nodes in embodiments of this application.

It should be understood that the communication method, the communication apparatus, the communication system, the node, and the like in embodiments of this application are applicable to a plurality of networks, for example, are applicable to a wired communication network, a wireless communication network, or a network that combines wired communication and wireless communication. For example, the wireless communication network includes a network connected by using the following communication technologies: SparkLink (SparkLink or NearLink), 802.11b/g, Bluetooth (Blue tooth), ZigBee (ZigBee), a radio frequency identification (radio frequency identification, RFID) technology, an ultra-wideband (ultra-wideband UWB) technology, a wireless short-range communication system, or the like. Alternatively, the wireless communication network may be a long-range connection technology including radio access type technologies such as a long term evolution (long term evolution, long term evolution)-based communication technology, a 5th generation mobile communication technology (5th generation mobile network or 5th generation wireless system, 5th-Generation, 5G or 5G technology for short), a global system for mobile communications (global System for mobile communications, GSM), a general packet radio service (general packet radio service, GPRS), or a universal mobile telecommunications system (universal mobile telecommunications system, UMTS). For another example, the wired communication network includes a network connected by using the following communication technologies: one or more of an optical fiber connection technology, a vehicle-mounted wired communication technology, a controller area network (controller area network, CAN), a local interconnect network (local interconnect network, LIN) bus, a CAN flexible data-rate (CAN flexible data-rate, CAN FD), an automotive Ethernet, or the like.

The following describes an architecture and a service scenario of a communication system to which embodiments of this application may be applied. It should be noted that a system architecture and a service scenario described in this application are intended to describe technical solutions in this application more clearly, and do not constitute a limitation on the technical solutions provided in this application. It should be understood that, with evolution of the system architecture and emergence of a new service scenario, the technical solutions provided in this application are also applicable to similar technical problems.

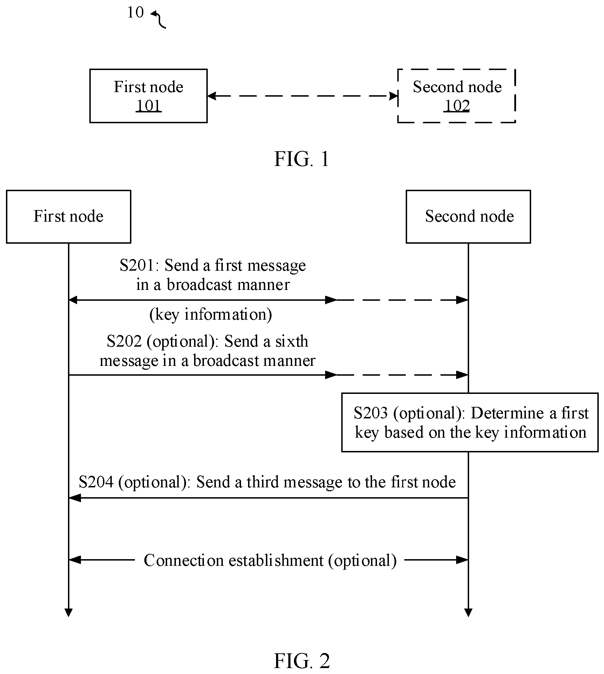

FIG. 1 is a diagram of an architecture of a communication system according to an embodiment of this application. The communication system 10 may include a first node 101, and may further include a second node 102.

The first node 101 has a communication capability. The communication capability herein may include a wireless communication capability, a wired communication capability (for example, having a wired communication interface), and the like. A wireless communication technology is, for example, a short-range wireless communication technology. Similarly, the second node 102 also has a communication capability.

When the communication system includes the first node and the second node, the first node 101 and the second node 102 may establish a connection (as shown in FIG. 1, the first node 101 and the second node 102 are connected through a solid line). The communication connection herein includes a direct connection, a connection through an intermediate node (for example, a control node), and the like. In the solution shown in FIG. 1, the connection between the first node 101 and the second node 102 may be wired, wireless, or a combination. It should be understood that, because a network model includes a plurality of layers, the connection herein may include a connection between peer entities at some layers in the node, for example, an access stratum connection.

In a possible implementation, the first node 101 may have a management capability, and can be accessed by another node, for example, the second node 102. In other words, the first node 101 may establish an association relationship with the second node 102. The management capability herein means that the first node may have capabilities such as allocating resources and controlling a data sending/receiving manner (for example, an encoding/decoding manner and a modulation manner). For example, the first node may send data scheduling information to the second node 102, and the second node 102 may send data based on the data scheduling information sent by the first node 101.

The following describes the method provided in embodiments of this application by using an example.

FIG. 2 is a schematic flowchart of a communication method according to an embodiment of this application. Optionally, the method may be implemented based on the communication system shown in FIG. 1. The communication method shown in FIG. 2 may include one or more of step S201 to step S204. It should be understood that, for ease of description, a sequence of S201 to S204 is used for description herein, but this is not intended to constitute a limitation that the method is necessarily performed in the foregoing sequence. An execution sequence, execution time, a quantity of execution times, and the like of the foregoing one or more steps are not limited in embodiments of this application. Steps S201 to S204 are specifically as follows.

Step S201: A first node broadcasts a first message.

The first message may include key information. The key information is associated with a first key, and includes but is not limited to one or more of the following: an identifier (including an ID, a number, and the like) of the first key, a key generation parameter of the first key, a management node ID corresponding to the first key, or the like.

For ease of understanding, the following describes two possible implementations of the key information.

Implementation 1: The key information includes the identifier of the first key. There is a correspondence between the identifier of the first key and the first key, and the key corresponding to the identifier may be determined based on the identifier of the first key. Table 1 is a diagram of a possible correspondence between a key and an ID of the key. The key E1 may be determined based on the id1, and similarly, the key E2 may be determined based on the id2. Other cases are deduced by analogy.

**Table 1**

| Key ID | Key |
|---|---|
| id1 | E1 |
| id2 | E2 |
| id3 | E3 |
| ... | ... |

Optionally, the correspondence shown in Table 1 may be preset or predefined in the first node. In a possible implementation, the correspondence shown in Table 1 may be pre-written into a key configuration module (described below).

Implementation 2: The key information includes a public key (that is, a key agreement parameter used to determine a key) of a key agreement algorithm, and the public key is referred to as a first public key for ease of differentiation. For example, the two nodes may determine the key by exchanging the public key. In this case, the first node first broadcasts the public key of the first node based on the first message, and a receiver (the second node is used as an example for description) of the first message may determine the first key based on the first public key and a private key of the receiver according to the key agreement algorithm. Correspondingly, the second node also generates the second public key and provides the second public key for the first node, and the first node may determine the first key based on the second public key and a private key of the first node. The first keys determined by the two nodes are consistent.

In some possible implementations, the first key or the key information may be determined from the key configuration module. At least one key and/or key information corresponding to the at least one key are/is configured in the key configuration module. The key configuration module may be a module built in the first node, or the key configuration module may access the first node through an external interface of the first node. In the latter case, the key configuration module may be an external module of the first node. For example, the key configuration module may be an encryption card.

The first node may obtain the first key and/or the key information corresponding to the first key from the key configuration module. For example, the key configuration module may include one or more keys. The first node may obtain one key (or several keys) from the key configuration module as the first key. The first node obtains the key information of the first key by using the first key, and sends the first message carrying the key information. For another example, at least one key and key information respectively corresponding to the at least one key are configured in the key configuration module. Before sending the first message, the first node obtains the key information (for example, the foregoing id1) of the first key via the key configuration module, and sends the first message carrying the key information to another node. When the first key needs to be used, for example, a plaintext needs to be encrypted or ciphertext needs to be decrypted, the first key corresponding to the key information of the first key is obtained from the key configuration module. For another example, the at least one key and the key information respectively corresponding to the at least one key are configured in the key configuration information. The first node may obtain the first key and the key information associated with the first key, and include the key information of the first key in the first message; and the first key is used to subsequently implement one or more operation processes such as encryption, decryption, integrity protection, and integrity check. It can be learned that, when the key configuration module includes the first key and the key information of the first key, the first key and the key information of the first key may be simultaneously obtained by the first node, or may be obtained at different moments.

In some possible implementations, the first message may further include information other than the key information. Optionally, the first message may further include one or more of industry information, information about a communication domain in which the first node is located, an identifier of the first node, indication information of a key agreement algorithm used in the first node (or a communication domain in which the first node is located), or the like. The industry information indicates an industry to which the first node belongs. For example, the industry includes but is not limited to a security industry, an electric power industry, or an intelligent terminal industry. The information about the communication domain includes but is not limited to one or more of the following: an identifier of the communication domain, a time synchronization manner used in the communication domain, a frequency domain resource of the communication domain, or the like. The identifier of the first node includes but is not limited to one or more of the following: a device identifier of the first node, a layer L2 ID of the first node, a network address of the second node, and the like. The indication information of the key agreement algorithm indicates the key agreement algorithm.

In some possible implementations, information in the first message belongs to one or more security types, and the security type is a degree of a security requirement of the information. For example, a security type of the information in the first message belongs to at least one of the following types: with encryption and with integrity protection, with encryption and without integrity protection, without encryption and with integrity protection, and without encryption and without integrity protection. Information whose security type is with encryption and with integrity protection is information that is encrypted and integrity-protected, information whose security type is with encryption and without integrity protection is information that is encrypted but not integrity-protected, information whose security type is without encryption and with integrity protection is information that is not encrypted but integrity-protected, and information whose security type is without encryption and without integrity protection is information that is not encrypted and that is not integrity-protected. For example, the key information is the information without encryption and with integrity protection or is the information without encryption and with integrity protection. In other words, the key information may not be encrypted by using the first key, so that the node that receives the first message can obtain the first key.

Optionally, the information included in the first message may be encrypted and integrity-protected by using the first key. After receiving the first message, another node may first obtain the first key based on the key information in the first message, to obtain other information in the first message by using the first key. In other words, security protection may be performed on the information in the first message by using the first key. The key information is used as an example. When the key information is information without encryption and with integrity protection, integrity protection is performed on the key information by using the first key. In this implementation, because integrity protection is performed on the key information, content of the key information obtained by the receiver may not be affected, and a peer end may check whether the key information is tampered with by an attacker.

Optionally, the first message broadcasts the first message, and the first message may be received by another node (for example, the second node), or may not be received by another node (therefore, a solid line with an arrow and a dashed line with an arrow are used to jointly represent the first message in FIG. 2).

In some possible implementations, the first key is used to perform security protection on at least one second message, and the at least one second message is a message that is related to the first node and that is transmitted after the first message. For example, the message related to the first node includes a message sent by the first node and/or a message received by the first node. It should be understood that performing security protection on the at least one second message includes encrypting a part or all of information (or the entire message) in the second message.

Optionally, the first message may alternatively be sent in a multicast manner. For example, the first node sends the first message to a node in a subnet.

Optionally, the method shown in FIG. 2 may further include step S202. Optionally, in this specification, it may be understood that this step may be performed or may not be performed. Step S202 is specifically as follows:

Step S202 (optional): The first node sends a sixth message in a broadcast manner.

Security protection is performed on the sixth message by using the first key, for example, encryption and/or integrity protection are/is performed on the sixth message by using the first key. Optionally, the encryption includes authentication encryption.

Optionally, that security protection is performed on the sixth message by using the first key includes: Security protection is performed on a part or all of information in the sixth message by using the first key.

In a possible implementation, a same key or different keys may be used for encryption or integrity protection. For example, different keys are used for encryption and integrity protection. The first key may include an encryption key and an integrity protection key. The sixth message is encrypted by using the encryption key, and integrity protection is performed by using the integrity protection key.

In a possible implementation, integrity protection is implemented by generating a verification value. For example, the first node generates the verification value by using the first key (or the integrity protection key) and the part or all of the information in the sixth message, and the verification value may be carried in the sixth message. A receiver of the sixth message may check the part or all of the information in the sixth message based on the verification value and the first key (or the integrity protection key).

In a possible example, the communication system includes the first node and the second node that can access the first node. Before the first node establishes a connection to the second node, the first node needs to first perform broadcasting, and broadcast information includes a system message. The system message may be used by the second node to initiate access to the first node. For example, the system information may include Group0, Group1, Group2, Group3, Group4, and Group5, which are respectively used to carry different information. For example, Group0 may carry the following information: a sending periodicity of the system message, a quantity of continuous hyper frames that may be used by a system in one sending periodicity, an offset of the system message in one sending periodicity, and the like; Group1 is used to carry, for example, a domain name of a communication domain; Group2 is used to carry, for example, a synchronization mode of a communication domain or information about time synchronization and frequency domain synchronization; and Group3 and Group4 may also carry information, and types of information carried in Group3 and Group4 are not listed one by one herein. In this application, the first message may be Group5, and Group5 may further carry other information. Refer to the foregoing descriptions. A sequence in which the first node sends the system messages may be, for example, first sending Group0, then sending Group5, and then sending one or more of Group1, Group2, Group3, Group4, or the like. The sixth message in step S202 is one or more of Group1, Group2, Group3, Group4, or the like.

It may be understood that security protection may not be performed on Group0 by using the first key, and security protection (for example, encryption and/or integrity protection) may be performed on one or more of Group1, Group2, Group3, Group4, or the like by using the first key.

Optionally, in some cases, the second node may receive the first message from the first node. In this case, the communication method shown in FIG. 2 may further include step S203 and/or step S204.

Step S203: The second node determines the first key based on the key information.

In a possible implementation, when the key information is the identifier of the first key, the second node may determine the first key based on the identifier of the first key. For example, the second node preconfigures (or predefines) a correspondence between the identifier of the first key and the first key (as shown in Table 1), and the second node may determine, based on the identifier of the first key, the first key corresponding to the identifier of the first key. For example, the key E1 corresponding to the id1 is determined based on the id1.

Optionally, the key configuration module may also be disposed in the second node. The second node may determine, from the key configuration module based on the key information, the first key corresponding to the key information. For example, the correspondence shown in Table 1 is stored by the key configuration module. The second node provides the key information for the key configuration module, and the key configuration module returns the first key corresponding to the key information.

In a possible implementation, the first message includes the first public key (namely, the key information), and the first public key is determined by the first node according to a first key agreement algorithm and a first private key. In this case, the second node may determine a second private key and the second public key according to the first key agreement algorithm, and determine the first key based on the second private key and the first public key. Further, the second node determines the second public key based on the second private key, and the second public key may be sent to the first node (described below).

Step S204: The second node sends a third message to the first node. Correspondingly, the first node receives the third message from the second node.

Security protection is performed on the third message by using the first key, for example, encryption and/or integrity protection are/is performed on the third message by using the first key. Optionally, the encryption includes authentication encryption. It should be noted that, that security protection is performed on the third message by using the first key includes: Security protection is performed on a part or all of information in the sixth message by using the first key.

In a possible implementation, a same key or different keys may be used for encryption or integrity protection.

For example, the first key includes the integrity protection key, and that security protection is performed on the third message by using the first key includes: Integrity protection is performed on the third message by using the integrity protection key. After receiving the third message from the second node, the first node checks integrity of the third message by using the integrity protection key. Optionally, integrity protection is implemented by generating a verification value. For example, the second node generates the verification value by using the first key (or the integrity protection key) and the part or all of the information in the third message, and the verification value may be carried in the third message. The first node may check the part or all of the information in the sixth message based on the verification value and the first key (or the integrity protection key).

For another example, the third message may include an encryption key. That security protection is performed on the third message by using the first key includes: The third message is encrypted by using the encryption key. In this case, the first node may decrypt the third message by using the encryption key.

Optionally, the integrity protection key and the encryption key may be a same key, or may be different keys.

In some possible implementations, after the third message, more messages may be transmitted between the first node and the second node. These messages may be encrypted by using the first key, or may be encrypted by using a newly determined second key. Alternatively, some are encrypted by using the first key, and some are encrypted by using a newly determined second key.

In some possible implementations, the first node and the second node may obtain the second key through agreement. The second key may be used to perform security protection on information transmitted between the first node and the second node. The second key may be directly used for encryption and/or integrity protection, or the second key may be used to derive a session key. The session key may include one or more of an encryption key, an integrity protection key, and an authenticated encryption key.

Optionally, the second key may alternatively be used to replace the first key to encrypt a message between the first node and the second node, or the first key and the second key may be used to encrypt different types of data, to adapt to security requirements in different communication scenarios. The following describes several use designs of the first key and the second key by using examples.

Design 1: Before the second key is determined through agreement, security protection is performed by using the first key, and after the second key is determined, security protection is performed by using the second key. Specifically, the first key is used to perform security protection on the at least one second message. The at least one second message herein may be a message that is related to the first node and that is transmitted before the second key is determined. Transmission time of the second message is later than that of the first message. The second key is used to derive a session key, and the session key is used to perform security protection on at least one fourth message. The at least one fourth message is a message transmitted between the first node and the second node after the second key is determined.

Further, in this case, if the first node and another node (for example, the third node) have not obtained a new key through agreement, the first key may still be used to perform security protection on a message transmitted between the first node and the third node.

Design 2: After agreeing on the second key, the first node and the second node may still use the first key to perform security protection on the information transmitted between the first node and the second node. In a possible case, the first key has corresponding start time. Therefore, although the first node and the second node determine the second key, before the second key is not started, the first key is used between the first node and the second node to perform security protection on the information transmitted between the first node and the second node.

Design 3: The at least one second message is a signaling plane message. The second key is used to derive a session key, and the session key is used to perform security protection on at least one fifth message. The at least one fifth message is a user plane message, and the at least one fifth message is a message transmitted between the first node and the second node after the second key is determined. In other words, the key derived based on the second key is used to encrypt the user plane message. After the second key is determined, the signaling plane message between the first node and the second node may still be encrypted by using the first key.

In the design 3, the user plane is a communication procedure (or protocol) responsible for transmitting and processing a user data stream, and may also be referred to as a data plane. The signaling plane refers to a communication procedure (or protocol) responsible for transmitting and processing system coordination signaling, and may also be referred to as a management plane (or access stratum information of the management plane may be referred to as a management frame), a control plane, or the like.

It should be understood that the foregoing three designs are merely examples, and are not intended as a limitation on embodiments of this application.

In some possible implementations, the first node and the second node may establish a communication connection (for example, an access stratum connection), to transmit other data of the first node and the second node through the communication connection, for example, user plane data and signaling.

In the embodiment shown in FIG. 2, that the first node broadcasts the key information associated with the first key is equivalent to notifying the outside of a clue for obtaining the first key, and the first node may subsequently perform, by using the first key, security protection on the message sent by the first node. Another node that receives the first message may determine the first key based on the key information. If the node needs to send a message to the first node, the node may also perform security protection on the message by using the first key.

In a wireless communication scenario, the first node needs to broadcast information to the outside, so that another node senses the first node. Based on the solution provided in this application, a node that needs to communicate with the first node can obtain the first key by using the first key without establishing a connection to the first node, so that when another node has not accessed the first node, the message sent to the first node may be encrypted by using the first key. In this way, communication security can be significantly improved.

Similarly, for the first node, after the first node broadcasts the key information associated with the first key, the information sent by the first node may be encrypted by using the first key and then sent. The node that successfully obtains the first key may obtain the encrypted information of the first node before establishing an association with the first node, so that security of the information broadcast by the first node can be improved.

An example wireless system is used as an example. The first node needs to broadcast a communication domain system message (system information broadcast, SIB) to the outside, so that another node senses the first node. Based on the solution provided in this application, the first node can encrypt sensitive information in the SIB by including the key information of the first key in the SIB, and an establishment request message in a connection establishment process, a message in an authentication process, a message in a security check process, and a message in a key agreement process may alternatively be encrypted by using the first key, so that when the first node and the second node have not obtained a consistent point-to-point new key through agreement, secure communication can be implemented between the first node and the second node, thereby significantly improving communication security.

The access stratum connection is mentioned in the foregoing solution. The following describes two signaling procedures for establishing the access stratum connection. Optionally, the procedure of establishing the access stratum connection may also be referred to as an access procedure or an association procedure. Specifically, the association refers to a process in which two nodes obtain a consistent communication key and establish a connection. The following uses a procedure in which a terminal node accesses a management node as an example for description. The management node may be considered as the first node, and correspondingly, the terminal node may be considered as the second node.

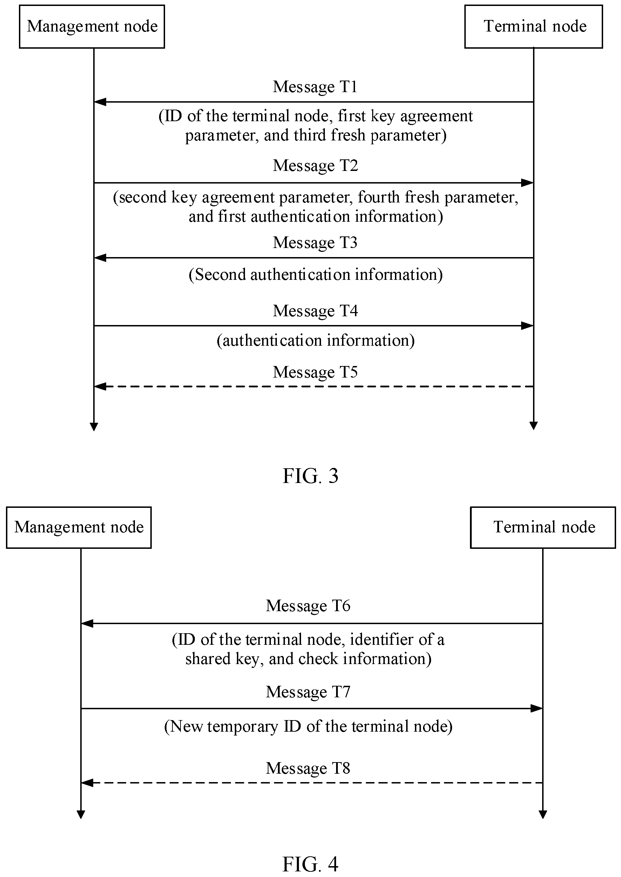

FIG. 3 is a diagram of an association procedure without a security context, including an authentication procedure and a security context procedure. For ease of differentiation, messages (or referred to as information) exchanged in the association procedure are respectively represented as T1 to T5 below. Before the association procedure, the terminal node and the management node do not have a security context, do not obtain a session key through agreement, and do not have a security context. During the association, the terminal node sends the message T1 (which may be considered as the foregoing third message), where the message T1 includes a terminal node ID, a first key agreement parameter, and a third fresh parameter. Security protection may be performed on the message T1 by using the first key. For a manner of obtaining the first key, refer to the embodiment shown in FIG. 2.

The management node determines a second key agreement parameter and a fourth fresh parameter, and determines a first key based on the first key agreement parameter and the second key agreement parameter. Further, the management node may determine a second key (for example, the key Kgt) by using the first key (for example, the key K_{KE}), the third fresh parameter, and the fourth fresh parameter. The management node provides the second key agreement parameter and the fourth fresh parameter for the terminal node based on the message T2. Optionally, the message T2 carries authentication information (that is, first authentication information), to check a key, an identity, or message integrity. Optionally, security protection may be performed on the message T2 by using the first key, or security protection may be performed on the message T2 by using a session key derived based on the second key.

The terminal node obtains the second key in a same manner. Further, the terminal node also derives the session key based on the second key, and the session key is used to perform security protection on a subsequent message (or security protection is still performed on some messages by using the first key). In this way, the terminal node and the management node obtain a consistent second key through agreement. The terminal node may further generate second authentication information, send the second authentication information through the message T3 to the management node. The management node checks the second authentication information. If the check succeeds, the management node sends the message T4 to the terminal node, to complete the association. Optional, the terminal node responds with the message T5, indicating that the association is completed. Similarly, security protection may be performed on one or more of the message T3, the message T4, the message T5, or the like by using the first key, or security protection may be performed by using the session key derived based on the second key, alternatively, security protection is performed on a part of the messages by using the first key, and security protection is performed on the other part of the messages by using a session key derived based on the second key.

It should be understood that, in a specific implementation process, more messages may be exchanged in the association procedure, or the messages may carry more or fewer parameters. For example, the third fresh parameter and the fourth fresh parameter may not be carried, and the second key may be obtained by using the first key and the counter when the second key is obtained. For another example, the first authentication information or the second authentication information may not be carried. For another example, optionally, the message T1 may further carry one or more of a security capability (indicating a security algorithm supported by the terminal node) of the terminal node, indication information of a key agreement algorithm, and the like. For another example, the message T2 may further carry a length of the authentication information, a length of the session key, an ID of the second key (or an ID of the first key), and indication information of the security algorithm. For another example, the message T4 may further carry one or more of the following: a temporary ID allocated by the terminal node to the management node, a expiration of the second key, a validity period of the first key, and the like. When the terminal node belongs to a communication group, the management node may further carry one or more of the following: a group key of the communication group, an ID of the group key, a group security algorithm, a validity period of the group key, and the like in the message T4.

The security context mentioned above is a group of information including a parameter related to communication security, for example, includes one or more of the following: a key, a fresh parameter, a key agreement parameter, information about a security algorithm, an identity of the terminal, and the like. The information about the security algorithm includes one or more of the following: indication information of the security algorithm, a version of the security algorithm, and the like.

For example, the security context may include one or more of the following information: a fixed ID of the terminal node, a temporary ID of the terminal node, a shared key (for example, represented as Kgt), a validity period of the shared key, an identifier (for example, Kgt ID) of the shared key, indication information of a key agreement algorithm, indication information of a signaling plane encryption algorithm, indication information of a signaling plane integrity protection algorithm, a signaling plane encryption key, a signaling plane integrity protection key, indication information of a user plane encryption algorithm, indication information of a user plane integrity protection algorithm, indication information of a user plane authenticated encryption algorithm, a user plane encryption key, a user plane integrity protection key, a user plane authenticated encryption key, a key derivation counter (counter), a COUNTERg, a global frame number (global frame number, GFN), a group key (for example, represented as a GK), a GK identifier (GK ID), a group algorithm (Galgorithm), a validity period of a group key (GK expiration), and a group global frame number (group global frame number, GGFN).

FIG. 4 is a diagram of an association procedure with a security context. For ease of differentiation, messages (or information) are respectively represented as T6 to T8 below. Before the association procedure, the management node obtains a security context of the terminal node. For content of the association context, refer to the foregoing descriptions. In the association procedure, the terminal node sends a message T6 (which may be considered as the foregoing third message) to the management node, and the message T6 carries an identity (which may be optionally a temporary identity or a fixed identity) of the terminal node, and optionally carries a Kgt ID. Optionally, security protection may be performed on the message T6 by using a first key, or security protection may be performed by using a key in the security context.

The management node obtains, based on the identifier of the terminal node, an integrity protection key shared with the terminal node, and checks integrity of an association message by using the integrity protection key. When successfully checking integrity of the message T6, the management node sends a message T7, and establishes an association between the management node and the terminal node. Security protection may be performed on the message T7 by using the first key, or security protection may be performed by using a key in the security context. Optionally, when the management node successfully checks the integrity of the message T6, the management node may further allocate a temporary ID to the terminal node. In this case, the message T7 may carry the temporary ID allocated by the management node to the terminal node.

It may be understood that the integrity protection key may be included in the security context, and the foregoing "checking integrity of the message T6 by using the integrity protection key" may also be replaced with "checking integrity of the message T6 based on the security context". Further, the security context may include indication information of an integrity protection algorithm and an integrity protection key, and the management node may check the integrity of the message T6 by using the integrity protection key and according to the specified integrity protection algorithm. Optionally, the integrity protection key herein may be a signaling plane integrity protection algorithm.

Further, the management node performs integrity protection on the message T7 according to the signaling plane integrity protection algorithm and by using a signaling plane integrity protection key Ks.int. Optionally, when signaling plane encryption protection is enabled, the management node may further perform encryption protection on the message T7 according to the signaling plane encryption algorithm and by using a signaling plane encryption key Ks.enc.

Optionally, the terminal node responds with a message T8, indicating that the association is completed. In some scenarios, if the message T7 is encrypted, the terminal node decrypts the message T7. If integrity protection is performed on the message T7, the terminal node verifies integrity of the message T7. If the integrity verification succeeds, the association is completed, and the terminal node may send the message T8 to the management node. Optionally, security protection may be performed on the message T8 by using the first key, or security protection may be performed by using a key in the security context.

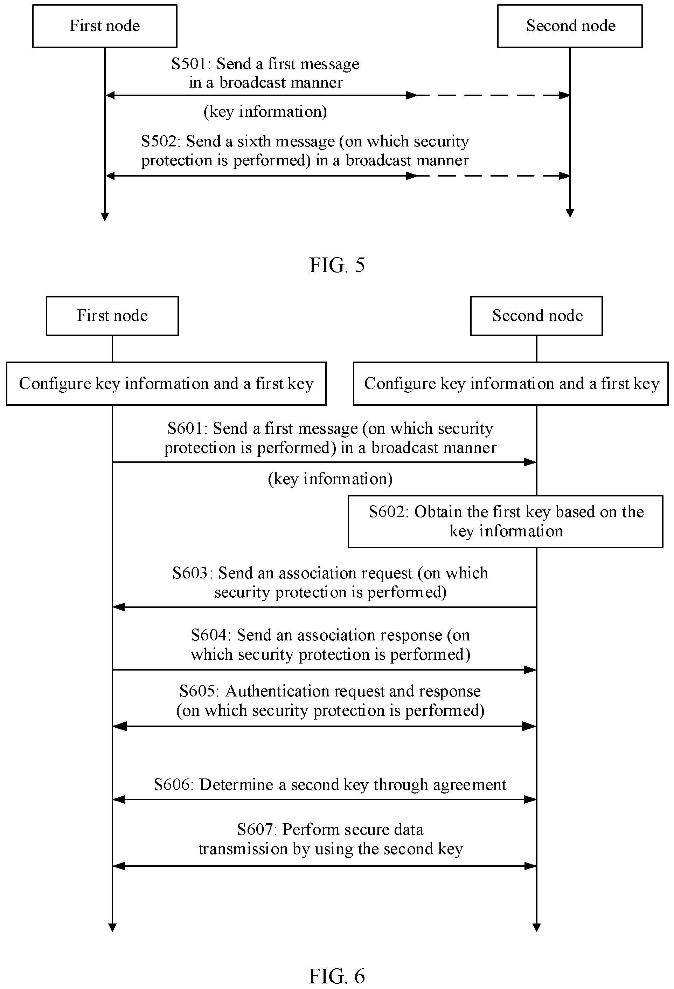

The embodiment shown in FIG. 2 provides a plurality of possible solutions. The following describes some possible designs thereof by using examples with reference to FIG. 5, FIG. 6, FIG. 7, FIG. 8, or FIG. 9. It should be understood that, for logic, terms, and the like in the embodiment shown in FIG. 5, FIG. 6, FIG. 7, FIG. 8, or FIG. 9, refer to the foregoing descriptions. In addition, in some figures of this application, the information indicated by the message is described as an example in the accompanying drawings. However, this does not represent a limitation on the information carried in the message. In a specific implementation process, the message may carry one or more pieces of information in parentheses followed by the message.

FIG. 5 is a schematic flowchart of another communication method according to an embodiment of this application. The communication method may include step S501 and step S502. Details are as follows:

Step S501: A first node sends a first message in a broadcast manner.

The first message may include key information, and the key information is associated with a first key. The first message further includes industry information and the like. For detailed descriptions, refer to the foregoing descriptions.

Optionally, the first message is used by another node to access the first node. For example, after receiving the first message, the another node may sense the first node and obtain the first key based on the key information, to securely access the first node by using the first key corresponding to the key information.

Optionally, before the first message, the first node may further send a seventh message in a broadcast manner. The seventh message may include an identifier of the first node and information about a communication domain in which the first node is located.

Optionally, before sending the first message, the first node may have sent other information. For example, the first node may send a system message Group0, and then send the first message (for example, Group5).

Step S502: The first node sends a sixth message in a broadcast manner. Security protection is performed on the sixth message by using the first key.

Refer to step S202. It should be noted that the sixth information may be one or more messages. For example, the sixth message may be one or more system messages, for example, one or more of Group1, Group2, Group3, Group4, or the like. For related descriptions, refer to the foregoing descriptions.

In the embodiment shown in FIG. 5, the first node broadcasts the key information associated with the first key, and performs, by using the first key, security protection on another message sent in a broadcast manner. In this way, security of broadcast communication of the first node can be improved.

FIG. 6 is a schematic flowchart of another communication method according to an embodiment of this application. The communication method may include a part or all of step S601 to step S607. It should be understood that the following uses only a sequence of steps S601 to S607 as an example for description. In a specific implementation process, an occasion for performing some steps may be changed, and some steps may be performed for a plurality of times. Step S601 to step S607 are specifically as follows. Details are as follows:
Step S601: A first node sends a first message in a broadcast manner.

The first message may include key information, and the key information is associated with a first key. It may be understood that a second node may receive the first message from the first node.

Step S602: The second node obtains the first key based on the key information.

Step S603: The second node sends an association request to the first node.

Security protection may be performed on the association request by using the first key. Correspondingly, the first node receives the association request from the second node. The association request may be the third message, the message T1 shown in FIG. 3, or the message T6 shown in FIG. 4. In this embodiment of this application, a name of a message is merely an example.

Step S604: The first node sends an association response to the second node.

Security protection may be performed on the association response by using the first key. Correspondingly, the second node receives the association response from the first node. For example, an association response message may be the message T2 shown in FIG. 3.

Step S605: The first node performs an authentication request and response with the second node.

Optionally, security protection is performed on a message exchanged in the authentication request and response by using the first key.

Step S606: The first node determines a second key by agreeing on with the second node.

Optionally, security protection may also be performed, by using the first key, on a message exchanged in a process of agreeing on the second key.

Step S607: The first node and the second node perform secure data transmission by using the second key.

The first node is used as an example. The first node may derive a session key based on the second key, and encrypt or decrypt, by using the session key, data transmitted between the first node and the second node. Similarly, the second node also derives a session key based on the second key, and decrypts or encrypts, by using the session key, the data transmitted between the second node and the first node.

In a possible case, if the first node does not provide the key information of the first key for the second node, before the first node does not access the first node, a message (or information) transmitted between the first node and the second node cannot be encrypted by using the key. For example, encryption or integrity protection cannot be performed on the association request. As a result, information transmitted before access or information transmitted before the second key is obtained through agreement may be monitored by an attacker, affecting security.

In this embodiment of this application, the first node may provide the second node with a thread for obtaining the first key, that is, the key information, the second node may find, based on the thread, the first key that can be used to perform secure communication with the first node, and security protection is implemented, by using the first key, on a message (or information) that is related to the first node and that needs to be transmitted before the first node is accessed, thereby improving communication security.

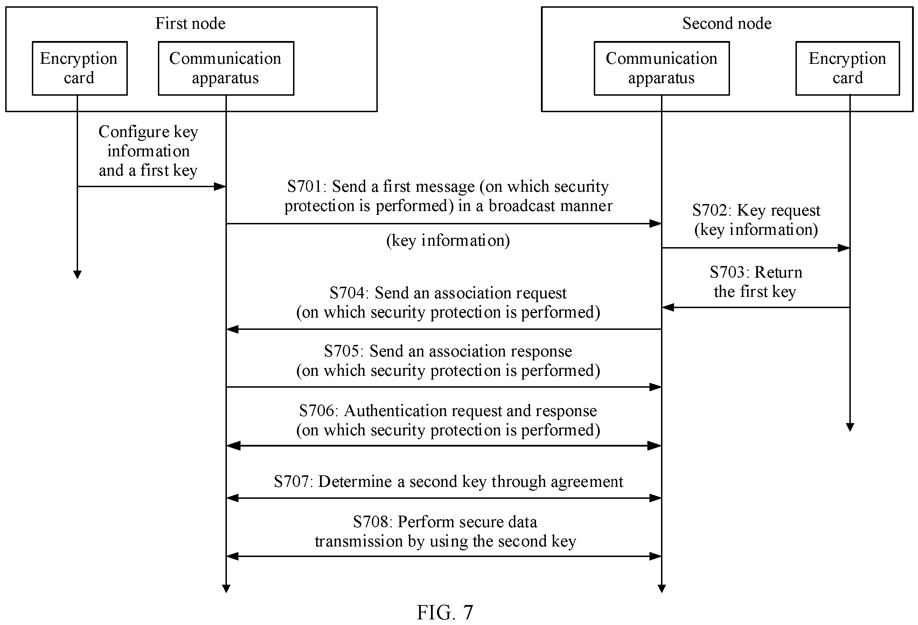

FIG. 7 is a schematic flowchart of another communication method according to an embodiment of this application. The communication method may include a part or all of step S701 to step S708. It should be understood that the following uses only a sequence of steps S701 to S708 as an example for description. In a specific implementation process, an occasion for performing some steps may be changed, and some steps may be performed for a plurality of times. Step S701 to step S708 are specifically as follows:
Step S701: A first node sends a first message to a second node in a broadcast manner.

The first message may include key information, and the key information is associated with a first key. It may be understood that the second node may receive the first message from the first node.

Step S702: A communication apparatus in the second node sends a key request to an encryption card.

The key request may carry the key information obtained from the first message.

Step S703: The encryption card in the second node returns the first key.

For example, the encryption card may store a key and key information corresponding to the key. Based on the key information carried in the key request, the encryption card may query the key corresponding to the key information, that is, the first key, and return the key to the communication apparatus in the second node.

Step S704: The second node sends an association request to the first node.

Security protection may be performed on the association request by using the first key. Correspondingly, the first node receives the association request from the second node. The association request may be the third message, the message T1 shown in FIG. 3, or the message T6 shown in FIG. 4. In this embodiment of this application, a name of a message is merely an example.

Step S705: The first node sends an association response to the second node.

Security protection may be performed on the association response by using the first key. Correspondingly, the second node receives the association response from the first node. For example, an association response message may be the message T2 shown in FIG. 3.

Step S706: The first node performs an authentication request and response with the second node.

Optionally, security protection is performed on a message exchanged in the authentication request and response by using the first key.

Step S707: The first node determines a second key by agreeing on with the second node.

Optionally, security protection may also be performed, by using the first key, on a message exchanged in a process of agreeing on the second key.

Step S708: The first node and the second node perform secure data transmission by using the second key.

The first node is used as an example. The first node may derive a session key based on the second key, and encrypt or decrypt, by using the session key, data transmitted between the first node and the second node. Similarly, the second node also derives a session key based on the second key, and decrypts or encrypts, by using the session key, the data transmitted between the second node and the first node.

In the embodiment shown in FIG. 7, keys are centrally managed by using the encryption card. In this way, a same key and key information of the key are set on the first node and the second node, so that security protection can be performed on a message (or information) transmitted between the first node and the second node, thereby improving communication security.

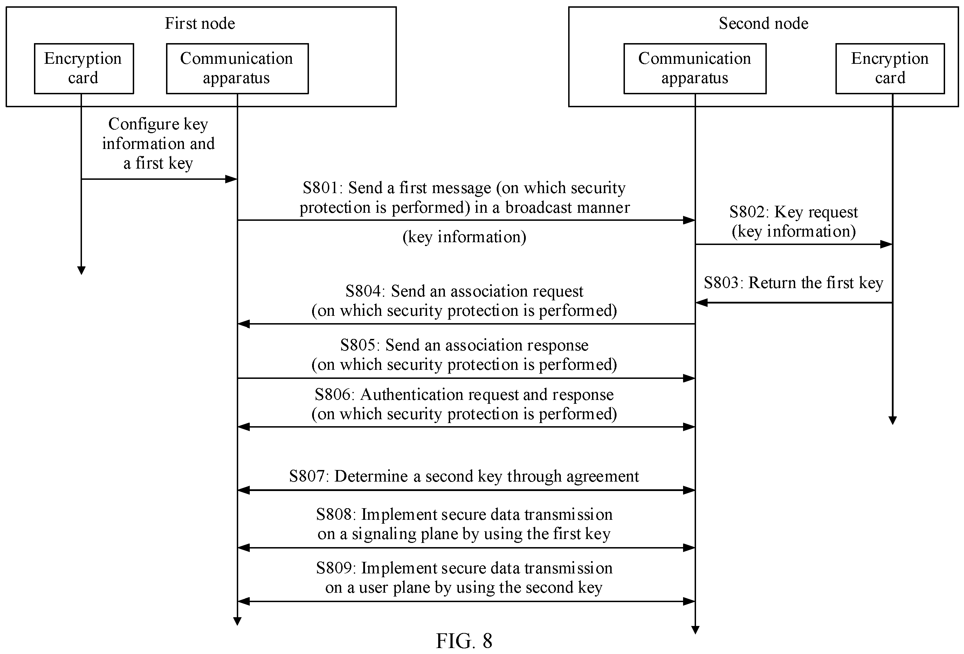

FIG. 8 is a schematic flowchart of another communication method according to an embodiment of this application. The communication method may include a part or all of step S801 to step S809. It should be understood that the following uses only a sequence of steps S801 to S809 as an example for description. In a specific implementation process, an occasion for performing some steps may be changed, and some steps may be performed for a plurality of times. Step S801 to step S809 are specifically as follows:

Step S801: A first node sends a first message to a second node in a broadcast manner.

The first message may include key information, and the key information is associated with a first key. It may be understood that the second node may receive the first message from the first node.

Step S802: A communication apparatus in the second node sends a key request to an encryption card.

The key request may carry the key information obtained from the first message.

Step S803: The encryption card in the second node returns the first key.

For example, the encryption card may store a key and key information corresponding to the key. Based on the key information carried in the key request, the encryption card may query the key corresponding to the key information, that is, the first key, and return the key to the communication apparatus in the second node.

Step S804: The second node sends an association request to the first node.

Security protection may be performed on the association request by using the first key. Correspondingly, the first node receives the association request from the second node. The association request may be the third message, the message T1 shown in FIG. 3, or the message T6 shown in FIG. 4. In this embodiment of this application, a name of a message is merely an example.

Step S805: The first node sends an association response to the second node.

Security protection may be performed on the association response by using the first key. Correspondingly, the second node receives the association response from the first node. For example, an association response message may be the message T2 shown in FIG. 3.

Step S806: The first node performs an authentication request and response with the second node.

Optionally, security protection is performed on a message exchanged in the authentication request and response by using the first key.

Step S807: The first node determines a second key by agreeing on with the second node.

Optionally, security protection may also be performed, by using the first key, on a message exchanged in a process of agreeing on the second key.

Step S808: The first node and the second node implement secure data transmission on a signaling plane by using the first key.

Step S809: The first node and the second node implement secure data transmission on a user plane by using the second key.

In the embodiment shown in FIG. 8, after the second key is obtained through agreement, security protection is performed on a signaling plane message (or information) by using the first key, and security protection is performed on a user plane message (or information) by using the second key (for example, a session key derived based on the second key). In this way, before and after the first node and the second node obtain the second key through agreement, communication security between the first node and the second node can be ensured. Therefore, after the second key is obtained through agreement, a plurality of sets of keys can encrypt a plurality of types of transmitted data by using different types of keys, thereby improving user experience.

The foregoing describes in detail the method in embodiments of this application. The following provides apparatuses in embodiments of this application.

It should be understood that division of units in the apparatus provided in embodiments of this application is merely logical function division. During actual implementation, all or a part of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units in the foregoing apparatus may be implemented in a form of software invoked by a processor; or all units may be implemented in a form of hardware circuit; or a part of units may be implemented in a form of software invoked by a processor, and a remaining part may be implemented in a form of hardware circuit.

In embodiments of this application, the processor is a circuit with a signal processing capability. In an implementation, the processor may be a circuit with an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by using a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a

CPU and a GPU.

The following lists several possible apparatuses.

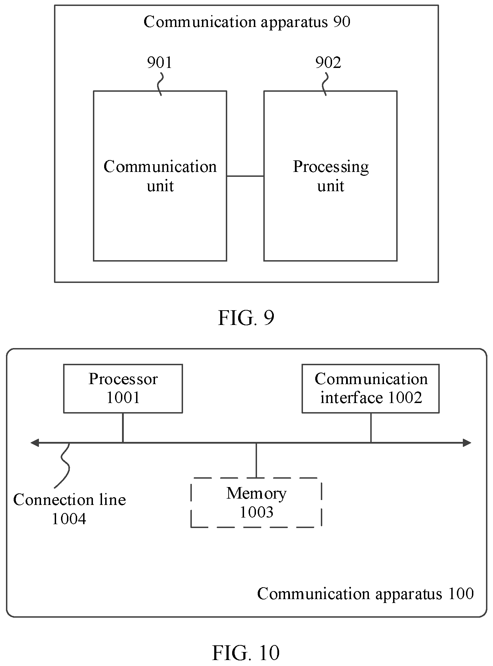

FIG. 9 is a diagram of a structure of a communication apparatus according to an embodiment of this application. Optionally, a communication apparatus 90 may be an independent device, for example, a node. Alternatively, a communication apparatus 90 may be a component, for example, a chip or an integrated circuit, in an independent device (for example, a node). The communication apparatus 90 is configured to implement the foregoing communication method, for example, the communication method shown in any one or more of the embodiments shown in FIG. 2, FIG. 5, FIG. 6, FIG. 7, or FIG. 8. Further, in some scenarios, the communication apparatus is further configured to implement the association procedure shown in FIG. 3 or FIG. 4.

As shown in FIG. 9, a communication apparatus 90 includes a communication unit 901 and a processing unit 902. The communication unit 901 is configured to implement one or more of the following operations: sending, receiving, monitoring, transmission, connection establishment, responding, and the like; and is further configured to implement another operation of the communication method. The processing unit 902 is configured to implement one or more of the following operations: processing, calculation, determining, generation, update, encryption, decryption, and the like; and is further configured to implement another operation of the communication method.

In a possible design, the communication apparatus 90 includes a communication unit 901 and a processing unit 902. The communication apparatus 90 is configured to implement the method on the first node side in the foregoing communication method.

In a possible implementation, the processing unit 902 is configured to generate a first message, where the first message includes key information, and the key information is associated with a first key.

The communication unit 901 is configured to send the first message in a broadcast manner. The first key is used to perform security protection on at least one second message, and the at least one second message is a message that is related to the first node and that is transmitted after the first message. For example, the message related to the first node includes a message sent by the first node and/or a message received by the first node.

The transmission may include sending, receiving, or the like.

In another possible implementation, the communication unit 901 is further configured to receive a third message from a second node, where the third message is used to request to establish an association with the first node. Security protection is performed on the third message by using the first key, and the third message belongs to the at least one second message.

In another possible implementation, the first key includes an integrity protection key, and that security protection is performed on the third message by using the first key includes: Integrity protection is performed on the third message by using the integrity protection key; and the processing unit 902 is further configured to check integrity of the third message by using the integrity protection key.

In another possible implementation, the first key includes an encryption key, and that security protection is performed on the third message by using the first key includes: The third message is encrypted by using the encryption key. The processing unit 902 is further configured to decrypt the third message by using the encryption key.

In another possible implementation, the first node includes a key configuration module. The processing unit 902 is further configured to determine the key information via the key configuration module.

In another possible implementation, a security type of information in the first message belongs to at least one of the following types: with encryption and with integrity protection, with encryption and without integrity protection, without encryption and with integrity protection, and without encryption and without integrity protection.

In another possible implementation of the first aspect, encryption or integrity protection may be performed on information included in the first message by using the first key. After receiving the first message, another node may first obtain the first key based on the key information in the first message, to obtain other information in the first message by using the first key.

In another possible implementation of the first aspect, the key information is information without encryption and with integrity protection or is information without encryption and with integrity protection.

In another possible implementation of the first aspect, the first key includes a first signaling plane key, and the at least one second message is a signaling plane message.

In another possible implementation of the first aspect, the processing unit 902 and the communication unit 901 are further configured to determine a second key by agreeing on with the second node, where the second key is used to perform security protection on a message between the first node and the second node.

The second key may be directly used for encryption or integrity protection, or the second key may be used to derive a session key. The session key may include one or more of an encryption key, an integrity protection key, and an authenticated encryption key.

In another possible implementation of the first aspect, the at least one second message is a message that is related to the first node and that is transmitted after the first message and before the second key is determined. The second key is used to derive a session key, the session key is used to perform security protection on at least one fourth message, and the at least one fourth message is a message transmitted between the first node and the second node after the second key is determined.

In another possible implementation of the first aspect, the at least one second message includes a message transmitted between the first node and the second node after the second key is determined.

In another possible implementation of the first aspect, the at least one second message is a signaling plane message. The second key is used to derive a session key, the session key is used to perform security protection on at least one fifth message, the at least one fifth message is a user plane message, and the at least one fifth message is a message transmitted between the first node and the second node after the second key is determined.

In another possible implementation of the first aspect, the first message further includes industry information, and the industry information indicates an industry to which the first node belongs.

Optionally, security protection may be performed on the industry information by using the first key.

In another possible implementation of the first aspect, the key information includes an identifier of the first key.

In another possible implementation of the first aspect, the first key and/or the key information are/is predefined.

In another possible implementation of the first aspect, the third message includes a second public key, and the second public key is associated with a first key agreement algorithm and a second private key. The processing unit 902 is further configured to:
determine a first private key and a first public key according to the first key agreement algorithm, where the key information includes the first public key; and
determine the first key based on the first private key and the second public key.

In another possible implementation of the first aspect, the at least one second message includes a broadcast message, for example, a broadcast message broadcast by the first node.

In another possible design, the communication apparatus 90 includes a communication unit 901 and a processing unit 902. The communication apparatus 90 is configured to implement the method on the second node side in the foregoing communication method.

In a possible implementation, the communication unit 901 is configured to receive a first message broadcast by a first node, where the first message includes key information.

The processing unit 902 is configured to determine a first key based on the key information. The first key is used to perform security protection on at least one second message, the at least one second message is a message that is related to the first node and that is transmitted after the first message, and the message related to the first node includes a message from the first node and/or a message sent to the first node.

In another possible implementation, the communication unit 901 is further configured to send a third message to the first node, where the third message is used to request to establish an association with the first node, security protection is performed on the third message by using the first key, and the third message belongs to the at least one second message.

In another possible implementation, the first key includes an integrity protection key. The processing unit 902 is further configured to generate a check value by using the integrity protection key, where the check value is used to check integrity of the third message, and the check value is carried in the third message.

In another possible implementation, the first key includes an encryption key. The processing unit 902 is further configured to encrypt the second message by using the encryption key. The communication unit 901 is further configured to send the encrypted second message to the first node.

In another possible implementation, the second node includes a key configuration module. The processing unit 902 is further configured to determine the key information via the key configuration module.

In another possible implementation, the processing unit 902 is further configured to: when the key information is information without encryption and with integrity protection, check integrity of the key information by using the first key.

In another possible implementation, the first key includes a first signaling plane key, and the at least one second message is a signaling plane message.

In another possible implementation, the communication unit 901 and the processing unit 902 are further configured to determine a second key by agreeing on with the first node, where the second key is used to perform security protection on a message between the first node and the second node.

In another possible implementation, the at least one second message is a message that is related to the first node and that is transmitted after the first message and before the second key is determined. The second key is used to derive a session key, the session key is used to perform security protection on at least one fourth message, and the at least one fourth message is a message transmitted between the first node and the second node after the second key is determined.

In another possible implementation, the at least one second message includes a message transmitted between the first node and the second node after the second key is determined.

In another possible implementation, the at least one second message is the signaling plane message.

The second key is used to derive a session key, the session key is used to perform security protection on at least one fifth message, the at least one fifth message is a user plane message, and the at least one fifth message is a message transmitted between the first node and the second node after the second key is determined.

In another possible implementation, the first message further includes industry information, and the industry information indicates an industry to which the first node belongs.

In another possible implementation, the key information includes an identifier of the first key.

In another possible implementation, the first key and/or the key information are/is predefined.

In another possible implementation, the key information includes a first public key, and the first public key is associated with a first key agreement algorithm and a first private key. The processing unit 902 is further configured to:
determine a second private key and a second public key according to the first key agreement algorithm, where the third message includes the second public key; and
determine the first key based on the second private key and the first public key.

In another possible implementation, the at least one second message includes a broadcast message.

FIG. 10 is a diagram of a structure of another communication apparatus according to an embodiment of this application. A communication apparatus 100 may be an independent device, for example, a node, or may be a component, for example, a chip, a software module, or an integrated circuit, included in an independent device. The communication apparatus 100 may include at least one processor 1001 and a communication interface 1002. Optionally, the communication apparatus 100 may further include at least one memory 1003. Further, optionally, the communication apparatus 100 may further include a connection line 1004. The processor 1001, the communication interface 1002, and/or the memory 1003 are/is connected through the connection line 1004, and/or communicate with each other through the connection line 1004 to transmit a control signal and/or a data signal. For example, the connection line may include a bus.

The processor 1001 is a module for performing an arithmetic operation and/or a logic operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1002 may be configured to provide information input or output for the at least one processor, or configured to receive a signal sent by the outside and/or send a signal to the outside.

For example, the communication interface 1002 may include an interface circuit.

For example, the communication interface 1002 may include a wired link interface like an Ethernet cable, or may be a wireless link (Wi-Fi, Bluetooth, universal wireless transmission, a vehicle-mounted short-range communication technology, another short-range wireless communication technology, or the like) interface.

Optionally, the communication interface 1002 may further include a radio frequency transmitter, an antenna, and the like. When the communication interface 1002 includes an antenna, there may be one or more antennas.

In a possible design, if the communication apparatus 100 is an independent device, the communication interface 1002 may include a receiver and a transmitter. The receiver and the transmitter may be a same component or different components. When the receiver and the transmitter are a same component, the component may be referred to as a transceiver.

In another possible design, if the communication apparatus 100 is a chip or a circuit, the communication interface 1002 may include an input interface and an output interface, and the input interface and the output interface may be a same interface or different interfaces.

Optionally, a function of the communication interface 1002 may be implemented by a transceiver circuit or a dedicated transceiver chip.

The memory 1003 is configured to provide storage space, and the storage space may store data such as an operating system and a computer program. The memory 1003 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of modules or units in the communication apparatus 100 listed above are merely examples for description.

Functional units in the communication apparatus 100 may be configured to implement the foregoing communication methods, for example, the communication method shown in FIG. 2, FIG. 5, FIG. 6, FIG. 7, or FIG. 8.

Optionally, the processor 1001 may be a processor specially configured to perform the foregoing method (for ease of differentiation, the processor is referred to as a dedicated processor), or may be a processor that invokes a computer program to perform the foregoing method (for ease of differentiation, the processor is referred to as a dedicated processor). Optionally, the at least one processor may alternatively include both a dedicated processor and a general-purpose processor.

Optionally, when the communication apparatus 100 includes at least one memory 1003, if the processor 1001 implements the foregoing communication methods by invoking a computer program, the computer program may be stored in the memory 1003.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication methods, for example, the communication method shown in FIG. 2, FIG. 5, FIG. 6, FIG. 7, or FIG. 8.

An embodiment of this application further provides a computer-readable storage medium. The computer-readable storage medium stores instructions. When the instructions are run on at least one processor (or communication apparatus), the foregoing communication method, for example, the communication method shown in FIG. 2, FIG. 5, FIG. 6, FIG. 7, or FIG. 8 is implemented.

An embodiment of this application further provides a computer program product. The computer program product includes computer instructions, and the computing instructions are used to implement the foregoing communication methods, for example, the communication method shown in FIG. 2, FIG. 5, FIG. 6, FIG. 7, or FIG. 8.

An embodiment of this application further provides a terminal. The terminal includes the foregoing communication apparatus 90 and/or communication apparatus 100.

In a possible implementation, the terminal includes a terminal node, and the terminal may be an intelligent terminal or a transportation tool, for example, a vehicle, an uncrewed aerial vehicle, or a robot.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces).

For example, at least one of a, b, or c may indicate: a, b, c, (a and b), (a and c), (b and c), or (a, b, and c), where a, b, and c may be singular or plural. The term "and/or" describes an association relationship between associated objects, and represents that three relationships may exist. For example, A and/or B may represent the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, the first node and the second node are merely used to facilitate description of fresh parameters in different implementations, and do not indicate different execution operations, importance degrees, structures, and the like of the first node and the second node.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A communication method, wherein the method is applied to a first node, and the method comprises:
generating a first message, wherein the first message comprises key information, and the key information is associated with a first key; and
sending the first message in a broadcast manner, wherein
the first key is used to perform security protection on at least one second message, the at least one second message is a message that is related to the first node and that is transmitted after the first message, and the message related to the first node comprises a message sent by the first node and/or a message received by the first node.

2. The method according to claim 1, wherein after sending the first message in a broadcast manner, the method further comprises:
receiving a third message from a second node, wherein the third message is used to request to establish an association with the first node, security protection is performed on the third message by using the first key, and the third message belongs to the at least one second message.

3. The method according to claim 2, wherein the first key comprises an integrity protection key, and that security protection is performed on the third message by using the first key comprises: integrity protection is performed on the third message by using the integrity protection key; and
after receiving the third message from the second node, the method further comprises:
checking integrity of the third message by using the integrity protection key.

4. The method according to claim 2 or 3, wherein the first key comprises an encryption key, and that security protection is performed on the third message by using the first key comprises: the third message is encrypted by using the encryption key; and
after receiving the third message from the second node, the method further comprises:
decrypting the third message by using the encryption key.

5. The method according to any one of claims 1 to 4, wherein the first node comprises a key configuration module, and before sending the first message in a broadcast manner, the method further comprises:
determining the key information via the key configuration module, wherein
at least one key and information corresponding to the at least one key are configured in the key configuration module, the first key belongs to the at least one key, and the key information is information corresponding to the first key.

6. The method according to any one of claims 1 to 5, wherein a security type of information in the first message belongs to at least one of the following types:
with encryption and with integrity protection, with encryption and without integrity protection, without encryption and with integrity protection, and without encryption and without integrity protection, wherein information whose security type is with encryption and with integrity protection is information that is encrypted and integrity-protected, information whose security type is with encryption and without integrity protection is information that is encrypted but not integrity-protected, information whose security type is without encryption and with integrity protection is information that is not encrypted but integrity-protected, and information whose security type is without encryption and without integrity protection is information that is not encrypted and that is not integrity-protected.

7. The method according to claim 6, wherein the key information is the information without encryption and with integrity protection or is the information without encryption and with integrity protection; and
when the key information is information without encryption and with integrity protection, integrity protection is performed on the key information by using the first key.

8. The method according to any one of claims 1 to 7, wherein the first key comprises a first signaling plane key, and the at least one second message is a signaling plane message.

9. The method according to any one of claims 1 to 7, wherein after sending the first message in a broadcast manner, the method further comprises:
determining a second key by agreeing on with the second node, wherein the second key is used to perform security protection on a message between the first node and the second node.

10. The method according to claim 9, wherein the at least one second message is a message that is related to the first node and that is transmitted after the first message and before the second key is determined; and
the second key is used to derive a session key, the session key is used to perform security protection on at least one fourth message, and the at least one fourth message is a message transmitted between the first node and the second node after the second key is determined.

11. The method according to claim 9, wherein the at least one second message comprises a message transmitted between the first node and the second node after the second key is determined.

12. The method according to claim 9, wherein the at least one second message is a signaling plane message; and the second key is used to derive a session key, the session key is used to perform security protection on at least one fifth message, the at least one fifth message is a user plane message, and the at least one fifth message is a message transmitted between the first node and the second node after the second key is determined.

13. The method according to any one of claims 1 to 12, wherein the first message further comprises industry information, and the industry information indicates an industry to which the first node belongs.

14. The method according to any one of claims 1 to 13, wherein the key information comprises an identifier of the first key.

15. The method according to any one of claims 1 to 9, wherein the first key and/or the key information are/is predefined.

16. The method according to claim 2 or 3, wherein the third message comprises a second public key, and the second public key is associated with a first key agreement algorithm and a second private key; and
before generating the first message, the method further comprises:
determining a first private key and a first public key according to the first key agreement algorithm, wherein the key information comprises the first public key; and
after receiving the third message from the second node, the method further comprises:
determining the first key based on the first private key and the second public key.

17. The method according to any one of claims 1 to 16, wherein the at least one second message comprises a broadcast message.

18. A communication method, applied to a second node, wherein the method comprises:
receiving a first message broadcast by a first node, wherein the first message comprises key information; and
determining a first key based on the key information, wherein
the first key is used to perform security protection on at least one second message, the at least one second message is a message that is related to the first node and that is transmitted after the first message, and the message related to the first node comprises a message from the first node and/or a message sent to the first node.

19. The method according to claim 18, wherein the method further comprises:
sending a third message to the first node, wherein the third message is used to request to establish an association with the first node, security protection is performed on the third message by using the first key, and the third message belongs to the at least one second message.

20. The method according to claim 19, wherein the first key comprises an integrity protection key, and before sending the third message to the first node, the method further comprises:
generating a check value by using the integrity protection key, wherein the check value is used to check integrity of the third message, and the check value is carried in the third message.

21. The method according to claim 19 or 20, wherein the first key comprises an encryption key, and sending the third message to the first node comprises:
encrypting the second message by using the encryption key; and
sending the encrypted second message to the first node.

22. The method according to any one of claims 18 to 21, wherein the second node comprises a key configuration module, and before sending the first message in a broadcast manner, the method further comprises:
determining the key information via the key configuration module, wherein
at least one key and information corresponding to the at least one key are configured in the key configuration module, the first key belongs to the at least one key, and the key information is information corresponding to the first key.

23. The method according to any one of claims 18 to 22, wherein the method further comprises:
when the key information is information without encryption and with integrity protection, checking integrity of the key information by using the first key.

24. The method according to any one of claims 18 to 23, wherein the first key comprises a first signaling plane key, and the at least one second message is a signaling plane message.

25. The method according to any one of claims 18 to 24, wherein after receiving the first message broadcast by the first node, the method further comprises:
determining a second key by agreeing on with the first node, wherein the second key is used to perform security protection on a message between the first node and the second node.

26. The method according to claim 25, wherein the at least one second message is a message that is related to the first node and that is transmitted after the first message and before the second key is determined; and
the second key is used to derive a session key, the session key is used to perform security protection on at least one fourth message, and the at least one fourth message is a message transmitted between the first node and the second node after the second key is determined.

27. The method according to claim 25, wherein the at least one second message comprises a message transmitted between the first node and the second node after the second key is determined.

28. The method according to claim 25, wherein the at least one second message is the signaling plane message; and
the second key is used to derive a session key, the session key is used to perform security protection on at least one fifth message, the at least one fifth message is a user plane message, and the at least one fifth message is a message transmitted between the first node and the second node after the second key is determined.

29. The method according to any one of claims 18 to 28, wherein the first message further comprises industry information, and the industry information indicates an industry to which the first node belongs.

30. The method according to any one of claims 18 to 29, wherein the key information comprises an identifier of the first key.

31. The method according to any one of claims 18 to 30, wherein the first key and/or the key information are/is predefined.

32. The method according to claim 19 or 20, wherein the key information comprises a first public key, and the first public key is associated with a first key agreement algorithm and a first private key; and the method further comprises:
determining a second private key and a second public key according to the first key agreement algorithm, wherein the third message comprises the second public key; and
determining the first key based on the second private key and the first public key.

33. The method according to any one of claims 18 to 32, wherein the at least one second message comprises a broadcast message.

34. A communication apparatus, wherein the communication apparatus comprises a communication unit and a processing unit, and the communication apparatus is configured to implement the method according to any one of claims 1 to 17.

35. A communication apparatus, wherein the communication apparatus comprises a communication unit and a processing unit, and the communication apparatus is configured to implement the method according to any one of claims 18 to 33.

36. A communication apparatus, wherein the communication apparatus comprises a processor and a communication interface; and
when the processor invokes a computer program or instructions in a memory, the method according to any one of claims 1 to 17 is performed, or the method according to any one of claims 18 to 33 is performed.

37. A chip, wherein the chip comprises a processor and a communication interface; and
the processor is configured to implement the method according to any one of claims 1 to 17, or implement the method according to any one of claims 18 to 33.

38. A communication system, wherein the communication system comprises a first node and a second node;
the first node comprises the communication apparatus according to claim 34; and
the second node comprises the communication apparatus according to claim 35.

39. A terminal, wherein the terminal comprises the communication apparatus according to claim 34, the communication apparatus according to claim 35, the communication apparatus according to claim 36, the chip according to claim 37, or the communication system according to claim 38.

40. A computer-readable storage medium, wherein the computer-readable storage medium is configured to store instructions or a computer program; and
when the instructions or the computer program is executed, the method according to any one of claims 1 to 17 is implemented, or the method according to any one of claims 18 to 33 is implemented.
